# EUROPEAN PATENT SPECIFICATION

(11) **EP 1 163 796 B1**
(45) Date of publication and mention of the grant of the patent: **08.10.2003**
(21) Application number: 00911085.9
(22) Date of filing: 17.03.2000
(51) Int. Cl.: H04N 5/44

(54) **A METHOD AND A DEVICE FOR ENCODING AND DECODING OF INTERLACED VIDEO SIGNALS BY A CODEC FOR PROGRESSIVE VIDEO SIGNALS**
VERFAHREN UND VORRICHTUNG ZUR KODIERUNG UND DEKODIERUNG VON ZEILENVERKÄMMTEN VIDEOSIGNALEN DURCH EINE CODEC-PROGRESSIVE ABTASTUNG VON VIDEOSIGNALEN
PROCEDE ET DISPOSITIF SERVANT A CODER ET A DECODER DES SIGNAUX DE BALAYAGE ENTRELACE AU MOYEN D'UN CODEC DESTINE A DES SIGNAUX DE BALAYAGE PROGRESSIFS

(30) Priority: 19.03.1999 GB 9906434; 29.04.1999 GB 9909911
(43) Date of publication of application: 19.12.2001
(73) Proprietor: Mitsubishi Electric Information Technology Centre Europe B.V., Guildford, Surrey GU2 5YD (GB); MITSUBISHI DENKI KABUSHIKI KAISHA, Tokyo 100-8310 (JP)
(72) Inventor: BOBER, Miroslaw, Guildford GU1 2SE (GB)
(74) Representative: Burke, Steven David
(86) International application number: GB0001027
(87) International publication number: WO00057639

(56) References cited:
- EP-A- 0 889 651
- US-A- 5 864 368

## Description

The majority of the current video encoding and decoding systems working with conventional, interlaced broadcast video signals use codecs specifically designed for interlaced video signals, such as compression codecs using the so-called ISO MPEG2 ISO standard (which can also support progressive signals).

In other situations where progressive video signals are processed, video codecs supporting progressive video format are deployed, and sometimes codecs that support only progressive, such as H.261 or H.263 (ITU) video signals are used.

However, in some situations it is desirable to encode and decode interlaced video signals using a progressive only codec. For example, this situation may arise when only a progressive video codec is available and the video material is in the interlaced format. One possible solution is to perform a motion-compensated conversion from interlaced to progressive video on the input of the progressive codec before encoding. A reverse transformation, e.g. from progressive to interlaced is performed after the decoding in the decoder. However, interlaced-to-progressive and progressive-to-interlaced conversion is complex and requires expensive hardware or significant processing power if performed in software. Thus such approach is often not practicable or economical.

It is known to interleave the lines of pairs of fields of an interlaced video signal and then to process the result as a single frame. However, it may not be practical or economical to perform such a conventional scan conversion. Furthermore, due to the time difference between successive fields of the interlaced video and object or camera motion, signal correlation between the neighbouring lines in the line-interleaved frame may be less then than the signal correlation between adjacent lines in the original fields. This can result in less effective coding.

EP-A-0889 651 discloses a picture encoder in which fields are interlaced to form a frame which is divided to form blocks. Each block is coded either in field units or in frame units, depending on efficiency.

This invention proposes a novel, low-cost solution to encoding and decoding of an interlaced video signal using a progressive-only video codec and which retains good coding quality.

The invention provides a method of coding an interlaced video signal as set out in claim 1.

The invention also provides a decoding method as set out in claim 7.

The invention also provides a coding apparatus as set out in claim 9 and a decoding apparatus as set out in claim 10.

An aspect of the invention idea is to group pairs or even numbers of the consecutive interlaced fields and convert them into super-frames, using a geometric transformation. The geometric transformation T maps 2∗k (k=1, 2, ...) video fields, each n*m pixels (e.g. n pixels horizontally by m pixels vertically) into one 2∗k∗n∗m super-frame. Such super-frames are then encoded by the progressive encoder. In the progressive decoder, super-frames are decoded normally and then converted back into interlaced video fields via inverse transformation T⁻¹.

Embodiments of the invention will be described with reference to the accompanying drawings, of which:
Fig. 1 is a block diagram illustrating elements of a method according to an embodiment of the invention;
Fig. 2 is a block diagram illustrating a method and apparatus according to an embodiment of the invention; and
Fig. 3 is a block diagram illustrating elements of a method according to a second embodiment of the invention.

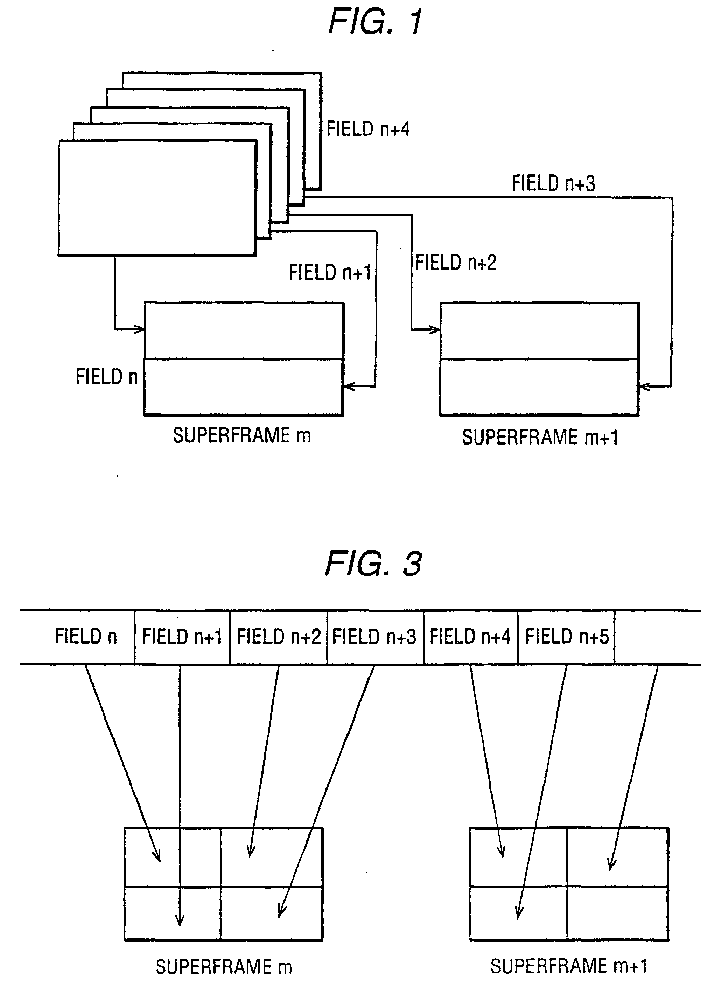

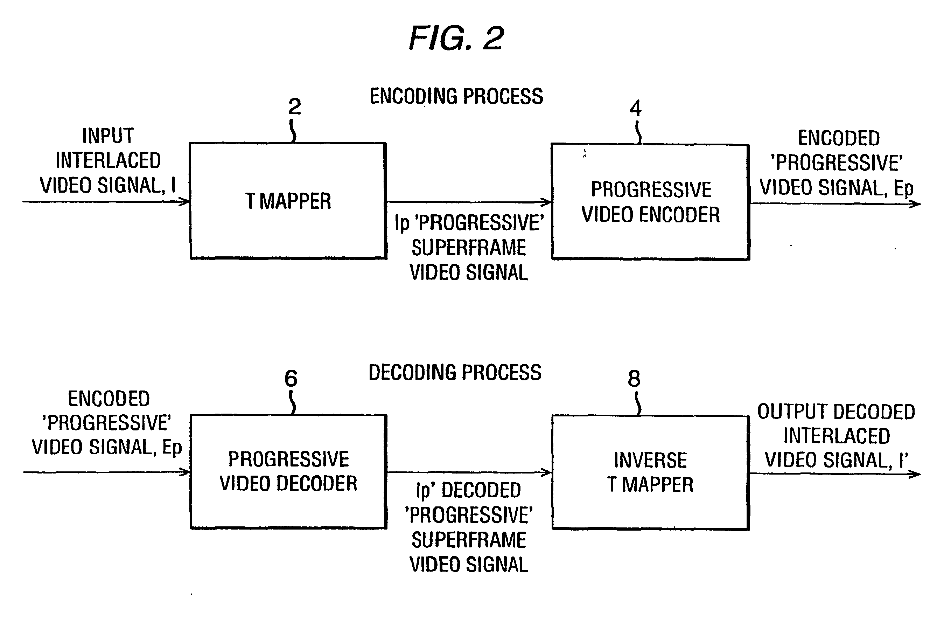

With reference to Figs. 1 and 2, each pair of interlaced fields n and n+1 is combined by a mapper 2 to form a respective, progressive super-frame, using a transformation T. Each super-frame S is then coded using a progressive video encoder 4. Similarly, in decoding, the super-frame is decoded using a progressive decoder 6, then transformed back to interlaced fields n, n+1 using the inverse transformation T⁻¹ by a mapper 8.

In this embodiment, the transformation T maps the first of each pair of interlaced fields to the top half of the respective super-frame and the second field to the bottom half of the respective super-frame. As a result, there is a boundary half-way down the super-frame corresponding to the boundary between the two fields, but elsewhere the correlation between adjacent lines in the super-frame is as for adjacent lines in the original fields.

In the above embodiment, fields n and n+1, are combined (and subsequently fields n+2 and n+3 and so on). In an alternative embodiment, shown in Fig. 3, each set of four consecutive fields, that is, fields n, n+1, n+2, n+3 are combined to form each super-frame. In this embodiment, fields are arranged adjacent to each other and one above another, as shown.

In the above embodiments, the temporal resolution of the original sequence (interlaced) is reduced for coding by a factor of a power of two, but with the benefit of an increase of the spatial resolution by the same factor. This may be useful if the progressive codec has a higher spatial resolution compared with the input interlaced sequence. For example, if an original interlaced video signal has CIF spatial resolution and a temporal resolution of 30 Hz, and the progressive video codec only supports 15 Hz temporal resolution, but at 2xCIF spatial resolution, then this implementation can be effectively applied.

In alternative embodiments, numbers of fields other than two or four can be combined to form the super-frames, and various transformations can be applied. The fields can be arranged in various ways in the super-frame such as horizontally or vertically or a combination of horizontally and vertically, depending, for example, on the resolution of the original images and of the codec. The fields can be divided into blocks with the blocks arranged and combined into a super-frame. Lines can be omitted from the fields in the super-frame if desired. The decoder is not necessarily a progressive-type decoder.

## Claims

1. A method of coding an interlaced video signal representing image fields, the method comprising combining at least two fields to form a frame using a transformation such that lines adjacent in a field are adjacent in the frame and coding the combined fields as a frame.

2. A method as claimed in claim 1 wherein even numbers of fields are combined to form a frame.

3. A method as claimed in claim 2 wherein two fields are combined to form a frame.

4. A method as claimed in claim 1 or claim 2 wherein more than two fields are combined to form a frame.

5. A method as claimed in any one of claims 1 to 4 wherein the coding is performed using a progressive-type coder (4).

6. A method as claimed in claim 5 wherein the spatial resolution of the progressive-type coder (4) is at least n times the spatial resolution of the fields of the interlaced video signal (I), where n is the number of fields making up a frame.

7. A method of decoding an interlaced video signal coded according to the method of any one of claims 1 to 6 comprising decoding a coded frame using a decoder (6) and then performing the inverse of said transformation to obtain an interlaced video signal (I).

8. A method as claimed in claim 7 wherein the decoder (6) is a progressive-type decoder.

9. An apparatus for coding an interlaced video signal representing image fields comprising means (2) for combining at least two fields to form a frame using a transformation such that lines adjacent in a field are adjacent in the frame and a progressive-type coder (4) for coding the frame.

10. An apparatus for decoding an interlaced video signal coded using a method as claimed in any one of claims 1 to 6 or using an apparatus as claimed in claim 9 comprising a decoder (6) and means (8) for applying an inverse transformation to decoded frames to produce fields to obtain an interlaced video signal.

11. An apparatus as claimed in claim 10 wherein the decoder (6) is a progressive-type decoder.

## Patentansprüche

1. Verfahren zum Kodieren eines verschachtelten Videosignals, welches Teilbilder darstellt, welches Verfahren aufweist: Kombinieren von zumindest zwei Teilbildern, um ein Vollbild zu bilden, unter Verwendung einer derartigen Transformation, dass in einem Teilbild benachbarte Zeilen in dem Vollbild benachbart sind, und Kodieren der kombinierten Teilbilder als ein Vollbild.

2. Verfahren nach Anspruch 1, bei dem geradzahlige Teilbilder kombiniert werden zur Bildung eines Vollbildes.

3. Verfahren nach Anspruch 2, bei dem zwei Teilbilder zur Bildung eines Vollbildes kombiniert werden.

4. Verfahren nach Anspruch 1 oder 2, bei dem mehr als zwei Teilbilder zur Bildung eines Vollbildes kombiniert werden.

5. Verfahren nach einem der Ansprüche 1 bis 4, bei dem das Kodieren unter Verwendung eines Kodierers (4) vom Progressionstyp durchgeführt wird.

6. Verfahren nach Anspruch 5, bei dem die räumliche Auflösung des Kodierers (4) vom Progressionstyp zumindest das n-fache der räumlichen Auflösung der Teilbilder des verschachtelten Videosignals (I) ist, wobei n die Anzahl von Teilbildern ist, die ein Vollbild bilden.

7. Verfahren zum Dekodieren eines verschachtelten Videosignals, das gemäß dem Verfahren nach einem der Ansprüche 1 bis 6 kodiert wurde, aufweisend die Dekodierung eines kodierten Vollbildes unter Verwendung eines Dekodierers (6) und anschliessende Durchführung des inversen Vorgangs der Transformation, um ein verschachteltes Videosignal (I) zu erhalten.

8. Verfahren nach Anspruch 7, bei dem der Dekodierer (6) ein Dekodierer vom Progressionstyp ist.

9. Vorrichtung zum Kodieren eines verschachtelten Videosignals, welches Teilbilder darstellt, aufweisend Mittel (2) zum Kombinieren von zumindest zwei Teilbildern zur Bildung eines Vollbildes unter Verwendung einer Transformation derart, dass in einem Teilbild benachbarte Zeilen in dem Vollbild benachbart sind, und einen Kodierer (4) vom Progressionstyp zum Kodieren des Vollbildes.

10. Vorrichtung zum Dekodieren eines verschachtelten Videosignals, das unter Anwendung eines Verfahrens nach einem der Ansprüche 1 bis 6 oder Verwendung einer Vorrichtung nach Anspruch 9 kodiert wurde, aufweisend einen Dekodierer (6) und Mittel (8) zur Durchführung einer inversen Transformation bei dekodierten Vollbildern, um Teilbilder zu erzeugen, um ein verschachteltes Videosignal zu erhalten.

11. Vorrichtung nach Anspruch 10, bei der der Dekodierer (6) ein Dekodierer vom Progressionstyp ist.

## Revendications

1. Procédé de codage d'un signal vidéo entrelacé représentant des champs d'images, le procédé comprenant la combinaison d'au moins deux champs pour former une trame en utilisant une transformation telle que des lignes adjacentes dans un champ sont adjacentes dans la trame, et un codage des champs combinés sous la forme d'une trame.

2. Procédé selon la revendication 1, selon lequel des nombres pairs de champs sont combinés pour former une trame.

3. Procédé selon la revendication 2, selon lequel deux champs sont combinés pour former une trame.

4. Procédé selon la revendication 1 ou la revendication 2, selon lequel plus de deux champs sont combinés pour former une trame.

5. Procédé selon l'une quelconque des revendications 1 à 4, selon lequel le codage est exécuté en utilisant un codeur de type progressif (4).

6. Procédé selon la revendication 5, selon lequel la résolution spatiale du codeur de type progressif (4) est égale au moins à n fois la résolution spatiale des champs du signal vidéo entrelacé (I), n étant le nombre de champs constituant une trame.

7. Procédé de décodage d'un signal vidéo entrelacé codé conformément au procédé selon l'une des revendications 1 à 6, comprenant le décodage d'une trame codée en utilisant un décodeur (6), puis l'exécution de l'inverse de ladite transformation pour obtenir un signal vidéo entrelacé (I).

8. Procédé selon la revendication 7, selon lequel le décodeur (6) est un décodeur de type progressif.

9. Dispositif pour coder un signal vidéo entrelacé représentant des champs d'images, comprenant des moyens (2) pour combiner au moins deux champs pour former une trame en utilisant une transformation de telle sorte que des lignes adjacentes dans un champ sont adjacentes dans la trame, et un codeur de type progressif (4) pour coder l'image complète.

10. Dispositif pour décoder un signal vidéo entrelacé codé en utilisant un procédé selon l'une quelconque des revendications 1 à 6, ou utilisant un dispositif selon la revendication 9, comprenant un décodeur (6) et des moyens (8) pour appliquer une transformation inverse à des trames décodées pour produire des champs pour obtenir un signal vidéo entrelacé.

11. Dispositif selon la revendication 10, dans lequel le décodeur (6) est un décodeur de type progressif.
